(19) **Europäisches Patentamt**

**European Patent Office**

**Office européen des brevets**

(11) **EP 0 870 788 B1**

(12) **EUROPÄISCHE PATENTSCHRIFT**

(45) Veröffentlichungstag und Bekanntmachung des Hinweises auf die Patenterteilung:
**02.07.2003 Patentblatt 2003/27**

(51) Int Cl.$^7$: **C08G 18/32**, C09D 175/04, C08G 18/67, C09D 175/14

(21) Anmeldenummer: **98106295.3**

(22) Anmeldetag: **07.04.1998**

(54) **Strahlungshärtbare wasserverdünnbare Urethanharze, Verfahren zu ihrer Herstellung und deren Verwendung**

Radiation-curable water-thinnable urethane resins, their preparation process and their use

Résines d'uréthane durcissables par rayonnement, leur procédé de préparation et leur utilisation

(84) Benannte Vertragsstaaten:
**AT BE DE DK FR GB IT NL SE**

(30) Priorität: **09.04.1997 AT 59997**

(43) Veröffentlichungstag der Anmeldung:
**14.10.1998 Patentblatt 1998/42**

(73) Patentinhaber: **Solutia Austria GmbH**
**8402 Werndorf (AT)**

(72) Erfinder:
• **Gerlitz, Marin, Dr.**
 **8055 Graz (AT)**
• **Kuttler, Ulrike, Dr.**
 **8041 Graz (AT)**
• **Fraydl, Thomas**
 **8041 Graz (AT)**
• **Kocsar, Andreas**
 **8052 Graz (AT)**
• **Leitner, Martin**
 **8462 Gamlitz (AT)**
• **Awad,Rami-Raimund, Dr.**
 **8042-Graz (AT)**

(74) Vertreter: **Deckers, Hellmuth, Dr.**
**Patentanwaltskanzlei Zounek,**
**Postfach 3540**
**65174 Wiesbaden (DE)**

(56) Entgegenhaltungen:
EP-A- 0 694 531  GB-A- 2 070 634
US-A- 5 290 663

## Beschreibung

Die Erfindung betrifft wasserverdünnbare Urethanharze, ein Verfahren zu ihrer Herstellung, und deren Verwendung als Bindemittel für durch radikalische Polymerisation vernetzbare Lacke, die in der Anwendungsform frei von Monomeren vorliegen, physikalisch trocknen und als Lackfilm einen hohen Vernetzungsgrad aufweisen.

Sehr ähnlich aufgebaute Urethanharze werden bereits in der EP 0694531 A2 beschrieben, wobei durch den Einbau von (Meth)acryloylgruppen enthaltenden Allophanatstrukturen eine Erhöhung der Vernetzungsdichte erreicht werden kann. Nachteilig ist jedoch, daß Lacke auf Basis derartiger Bindemittel vor der Strahlungshärtung nicht die speziell für die Holzlackierung geforderte ausreichende physikalische Trocknung der Lackfilme erreichen.

Es wurde nun gefunden, daß im Vergleich zu den gemäß der EP 0694531 A2 erhaltenen Urethanharzen bezüglich der physikalischen Trocknung wesentlich verbesserte Produkte hergestellt werden können, wenn mittels spezieller Verfahrensschritte eine gezielte Verteilung der (Meth)acryloylgruppen entlang der Polymerkette erreicht wird. Auch ist bei diesem Verfahren kein Einbau von zusätzlichen Allophanat-, Biuret-, Uretdion- oder Isocyanuratstrukturen erforderlich.

Die vorliegende Erfindung betrifft demgemäß strahlungshärtbare wasserverdünnbare Urethanharze, welche dadurch erhältlich sind, daß man in einem ersten Reaktionsschritt

(A)     1,0 mol eines cycloaliphatischen und/oder aromatischen Diisocyanats umsetzt mit einer Mischung

(B1)     einer (Meth)acryloylgruppen enthaltenden Dihydroxyverbindung in einer solchen Menge, daß die Stoffmenge der darin enthaltenen reaktiven Hydroxylgruppen 0,2 bis 0,6 mol beträgt, und

(B2)     eines teilweise mit (Meth)acrylsäure veresterten drei- oder vierwertigen Polyols mit einer restlichen mittleren Hydroxylfunktionalität von 1,0 bis 1,4 im Molekül in einer solchen Menge, daß die Stoffmenge der reaktionsfähigen Hydroxylgruppen 0,4 bis 0,8 mol beträgt,

wobei die Mengen von (B1) und (B2) so gewählt werden, daß die Summe der Stoffmengen der reaktionsfähigen Hydroxylgruppen von (B1) und (B2) im ersten Schritt immer 1,0 mol beträgt, in der Weise, daß ca. 40 bis ca. 60 %, bevorzugt ca. 45 bis ca. 55 %, besonders bevorzugt 50 % der Isocyanatgruppen von (A) zu Urethangruppen umgewandelt werden, und das so erhaltene Zwischenprodukt anschließend in einem zweiten Schritt mit

(C)     einer aliphatischen gesättigten Monocarbonsäure mit mindestens zwei Hydroxylgruppen in einer solchen Menge, daß die Stoffmenge der reaktiven Hydroxylgruppen 0,6 bis. 1 mol beträgt,

bis zur vollständigen Reaktion der Hydroxylgruppen von (C) und gegebenenfalls in einem dritten Schritt mit weiterem Polyol (B2) in einer solchen Menge umsetzt, daß die Stoffmenge an Hydroxylgruppen von dieser Portion von (B2) 0 bis 0,5 mol beträgt, bis zur vollständigen Reaktion der restlichen freien Isocyanatgruppen, wobei die Stoffmengenverhältnisse der Komponenten (A) bis (C) in allen drei Schritten so gewählt werden, daß sich die Anzahl der in der Komponente (A) enthaltenen Isocyanatgruppen und die Anzahl der in den Komponenten (B1), (B2) und (C) insgesamt enthaltenen Hydroxylgruppen wie 0,9 : 1 bis 1 : 1 verhalten und das Reaktionsprodukt Carboxylgruppen aufweist entsprechend einer Säurezahl von 20 bis 40 mg/g, sowie einen spezifischen Doppelbindungsgehalt (Stoffmenge der äthylenischen Doppelbindungen bezogen auf die Masse des Feststoffes des Urethanharzes) von maximal 3,5 mol/kg.

Diese Harze lassen als wäßrige Dispersionen oder Lösungen formulieren, wenn man vor dem Mischen mit Wasser einen Teil, bevorzugt mindestens 40 %, der in dem Harz vorhandenen Carboxylgruppen durch Zusatz von Neutralisationsmitteln wie Alkalihydroxiden oder tertiären Aminen in Carboxylatgruppen überführt. Das partiell neutralisierte Harz läßt sich dann normal oder invers dispergieren (Einrühren von Harz in Wasser oder von Wasser in Harz), vorzugsweise unter Einwirkung von Scherung durch schnelllaufende Rührwerke, Dissolverscheiben, UltraschallDispergatoren oder Dispergatoren nach dem Rotor-Stator-Prinzip.

Die Angaben für den Umsatz der Isocyanatgruppen und den Neutralisationsgrad sind so zu verstehen, daß die übliche Ungenauigkeit der Bestimmung die Abgrenzung der Werte ist. Daher bedeutet z. B. "ca. 50 %" oder "50 %" den Bereich von 50 % abzüglich und zuzüglich der üblichen analytischen Bestimmungsgenauigkeit, also bei einem Meßfehler von 1,5 den Bereich von 48,5 bis 51,5 %.

Die Erfindung betrifft auch ein bis zu dreistufiges Verfahren zur Herstellung dieser Polyurethanharze, in dessen erster Stufe

(A)     1,0 mol eines cycloaliphatischen und/oder aromatischen Diisocyanats umgesetzt wird mit einer Mischung (B) aus

(B1)    einer (Meth)acryloylgruppen enthaltenden Dihydroxyverbindung und

(B2)    einem teilweise mit (Meth)acrylsäure veresterten drei- oder vierwertigen Polyol mit einer restlichen mittleren Hydroxylfunktionalität von 1,0 bis 1,4 im Molekül, wobei die Mengen von (B1) und (B2) so gewählt werden, daß die Stoffmenge der reaktiven Hydroxylgruppen in (B1) ($n_{OH}$(B1)) 0,2 bis 0,6 mol, und die Stoffmenge der reaktiven Hydroxylgruppen in (B2) ($n_{OH}$(B2)) 0,8 bis 0,4 mol beträgt, wobei stets die Summe $n_{OH}$(B1) + $n_{OH}$(B2) = 1 mol ist,

in der Weise, daß 50 % der Isocyanatgruppen von (A) zu Urethangruppen umgewandelt werden, und in der zweiten Stufe das so erhaltene Zwischenprodukt anschließend mit

(C)    0,3 bis 0,5 mol 2,2-Bis-(hydroxymethyl)-propionsäure
bis zur vollständigen Reaktion der Hydroxylgruppen von (C) und gegebenenfalls in der dritten Stufe mit weiterem Polyol (B2) in einer solchen Menge umgesetzt wird, daß die Stoffmenge an Hydroxylgruppen von (B2) 0 bis 0,5 mol beträgt, bis zur vollständigen Reaktion der restlichen freien Isocyanatgruppen. Die Stoffmengenverhältnisse der Komponenten (A) bis (C) werden dabei so gewählt, daß sich die Anzahlen der in den Komponenten (A) bis (C) enthaltenen Isocyanatgruppen und Hydroxylgruppen wie 0,9 : 1 bis 1 : 1 verhalten und das Reaktionsprodukt Carboxylgruppen entsprechend einer Säurezahl von 20 bis 40 mg/g, sowie einen spezifischen Doppelbindungsgehalt (Stoffmenge der äthylenischen Doppelbindungen bezogen auf die Masse des Feststoffes des Urethanharzes) von maximal 3,5 mol/kg aufweist.

Die Erfindung betrifft weiters die Verwendung der erfindungsgemäß hergestellten Urethanharze als Bindemittel für durch radikalische Polymerisation bzw. Einwirkung von energiereicher Strahlung vernetzbare wasserverdünnbare Lacke.

Die Säurezahl ist gemäß DIN 53 402 definiert als der Quotient derjenigen Masse $m_{KOH}$ an Kaliumhydroxid, die erforderlich ist, um eine zu untersuchende Probe zu neutralisieren, und der Masse $m_B$ dieser Probe (Masse des Feststoffes in der Probe bei Lösungen oder Dispersionen); ihre übliche Einheit ist "mg/g".

Für die Komponente (A) kommen die cycloaliphatischen Diisocyanate mit 6 bis 40 Kohlenstoffatomen in Betracht, bevorzugt diejenigen mit 6 bis 15 Kohlenstoffatomen wie 1,4-Cyclohexyldiisocyanat, 1,1-Methylen-bis(4-isocyanatocyclohexan) und das sog. Dimerylisocyanat (1,2-Bis(9-isocyanatononyl)-3-heptyl-4-pentylcyclohexan), und die aromatischen Diisocyanate mit 6 bis 20 Kohlenstoffatomen wie 2,4-und 2,6-Diisocyanatotoluol ("TDI", insbesondere das als Toluylendiisocyanat bezeichnete kommerziell erhältliche Isomerengemisch), 1,5-Naphthylendiisocyanat, MDI (4,4'-Methylendiphenyldiisocyanat), "TDI-Dimer" 1,3-Bis(3-isocyanato-4-methylphenyl)-2,4-dioxodiazetidin, "TDI-Harnstoff" (N,N'-Bis-(4-methyl-3-isocyanatophenyl)-harnstoff) und Tetramethylxylylendiisocyanat. Besonders bevorzugt werden als cycloaliphatisches Diisocyanat Isophorondiisocyanat und als aromatisches Diisocyanat Toluylendiisocyanat eingesetzt.

Bei der Komponente (B1), als (Meth)-acryloylgruppen enthaltende Dihydroxyverbindung definiert, handelt es sich um Umsetzungsprodukte von Diglycidylverbindungen mit (Meth)acrylsäure, wie sie in bekannter Weise mittels basischer Katalyse erhalten werden. Es können aliphatische, cycloaliphatische oder aromatische Diglycidylverbindungen eingesetzt werden, bevorzugt sind aliphatische Diglycidylverbindungen abgeleitet von α,ω-Diolen mit 4 bis 10 Kohlenstoffatomen oder Polyoxyalkylen-diolen, bevorzugt Polyäthylen- und Polypropylenglykol oder Mischungen dieser Oxyalkylengruppen enthaltende Polyglykole. Besonders bevorzugt sind beispielsweise Butandioldiglycidyläther, Hexandioldiglycidyläther, Polypropylenglykoldiglycidyläther (wobei das zugrundeliegende Polypropylenglykol verschiedene Polymerisationsgrade aufweisen kann), und Cyclohexandimethanoldiglycidyläther. Es lassen sich auch Diglycidylester wie Hexahydrophthalsäurediglycidylester und aromatische Verbindungen wie Bisphenol-A-Diglycidyläther und Bisphenol-F-Diglycidyläther einsetzen. Die Menge von (B1) ist so zu bemessen, daß je 1 mol der Diisocyanatverbindung (A) 0,2 bis 0,6 mol reaktive Hydroxylgruppen in (B1) sind. Dabei bedeutet "reaktiv", daß die betreffende Hydroxylgruppe mit einer Isocyanatgruppe von (A) unter Ausbildung einer Urethangruppe reagiert.

Als Komponente (B2), die als teilweise mit (Meth)acrylsäure verestertes drei- ode vierwertiges Polyol mit einer restlichen mittleren Hydroxylfunktionalität von 1,0 bis 1,4 im Molekül definiert ist, werden partielle Veresterungsprodukte der 5 (Meth)acrylsäure mit drei- oder vierwertigen Polyolen oder deren Mischunger verwendet. Dabei lassen sich auch Reaktionsprodukte von solchen Polyolen mit Äthylenoxid oder Propylenoxid oder deren Mischungen verwenden, oder Reaktionsprodukte solcher Polyole mit Lactonen, die sich unter Ringöffnung an diese Polyole addieren. Geeignete Lactone sind z. B. γ-Butyrolacton und insbesondere δ-Valerolacton und ε-Caprolacton. Bevorzugt eingesetzt werden alkoxylierte Polyole mit maximal zwei Alkoxygruppen pro Hydroxyl-Funktionalität sowie mit ε-Caprolacton modifizierte Polyole. Diese gegebenenfalls modifizierten Polyole werden mit Acrylsäure, Methacrylsäure oder deren Mischungen partiell verestert, bis die gewünschte restliche Hydroxylfunktionalität erreicht ist. Die Komponente (B2) wird im ersten Schritt in einer solchen Menge eingesetzt, daß je 1 mol der Diisocyanatverbindung (A) 0,4 bis 0,8 mol reaktive Hydroxylgruppen in (B2) sind. Soweit weitere Menge der Komponente (B2) im dritten Schritt eingesetzt werden, ist deren Menge dann so zu bemessen, daß je 1 mol der Diisocyanatverbindung (A) zwischen 0 und 0,5 mol reaktive Hydroxylgruppen aus der Zugabe von (B2) im dritten Schritt stammen. Im dritten Schritt wird weiteres Polyol (B2) dann zugesetzt, wenn nach der Umsetzung mit der Komponente (C) im zweiten Schritt noch unverbrauchte Isocyanatgruppen im Reaktionsprodukt der zweiten Stufe vorhanden sind.

Als Komponente (C) lassen sich alle gesättigten aliphatischen Carbonsäuren mit mindestens zwei Hydroxylgruppen pro Molekül einsetzen. Geeignet sind beispielsweise Dihydroxybernsteinsäure, Weinsäure, und besonders bevorzugt die 2,2-Bis-(hydroxymethyl)-propionsäure, die im Handel auch unter der Bezeichnung Dimethylolpropionsäure (DMPS) erhältlich ist. Im Fall von Dihydroxysäuren ist die einzusetzende Stoffmenge 0,3 bis 0,5 mol (Stoffmenge an Hydroxyl-Gruppen 0,6 bis 1 mol) je 1 mol der Diisocyanatverbindung (A).

Zur Durchführung des erfindungsgemäßen Verfahrens wird in der ersten Stufe die Komponente (A) vorgelegt und ein Gemisch aus der Komponente (B1) und der Komponente (B2) innerhalb eines Zeitraums von bevorzugt 30 Minuten bis 6 Stunden unter Berücksichtigung der auftretenden Exothermie bevorzugt so zugegeben, daß die "kritische" Temperatur zur Monourethanausbildung nicht überschritten wird.

Dabei werden die Mengen der Komponenten (A), (B1) und (B2) so gewählt, daß auf 1 mol der Komponente (A) 0,2 bis 0,6 mol reaktionsfähige Hydroxylgruppen aus (B1) und 0,4 bis 0,8 mol reaktionsfähige Hydroxylgruppen aus (B2) kommen, wobei die Summe der Stoffmengen der reaktionsfähigen Hydroxylgruppen von (B1) und (B2) immer 1,0 Mol beträgt.

Diese Reaktionstemperatur im Bereich von 30 bis 60 °C ist abhängig von den Edukten (Reaktanten) und sie muß für jede Kombination in Vorversuchen experimentell bestimmt werden. Das Reaktionsgemisch wird so lange gerührt, bis der theoretische restliche Gehalt an nicht umgesetzten Isocyanatgruppen erreicht ist.

Nur bei einer möglichst quantitativen Umsetzung der Diisocyanate zu den entsprechenden "Monourethanen" werden die erforderlichen niedermolekularen Endprodukte erhalten, aus denen sich stabile Dispersionen herstellen lassen (siehe Vergleichsbeispiel V1).

Das auf diese Weise erhaltene Zwischenprodukt wird anschließend in der zweiten Stufe bevorzugt mit 2,2-Bis-(hydroxymethyl)-propionsäure als Komponente (C) bei 70 bis 95 °C bis zur vollständigen Reaktion der Hydroxylgruppen von Komponente (C) umgesetzt. Sollte dabei eine zu hohe Viskosität des Reaktionsansatzes auftrete so können diesem gegenüber Isocyanatgruppen inerte Lösungsmittel zugesetz werden, die mit Wasser ein Azeotrop bilden und später aus der wäßrigen Dispersion mittels Destillation entfernt werden können.

Die Menge der Komponente (C) wird dabei so bemessen, daß pro 1 mol der Diisocyanatverbindung aus der ersten Stufe 0,6 bis 1 mol Hydroxylgruppen (0,3 bis 0,5 mol der Komponente (C), wenn Dihydroxysäuren eingesetzt werden) durch die Komponente (C) in die Reaktion eingebracht werden.

Gegebenenfalls werden in einer dritten Stufe noch weitere Mengen der Komponente (B2) zugegeben. Diese Menge wird so gewählt, daß bis zu 0,5 mol Hydroxylgruppen in dieser Zusatzmenge von (B2) pro 1 mol des eingesetzten Diisocyanats (A) enthalten sind. Der Reaktionsansatz wird anschließend bevorzugt bei maximal 100 °C bis zur vollständigen Umsetzung aller Isocyanatgruppen gehalten.

Die Mengen der Komponenten (A) bis (C) in allen drei Stufen werden so gewählt, daß sich die Stoffmengen (oder Anzahlen) aller in den Komponenten (A) bis (C) enthaltenen Isocyanatgruppen und reaktionsfähigen Hydroxylgruppen wie 0,9 : 1 bis 1 : 1 verhalten und das Reaktionsprodukt Carboxylgruppen entsprechend einer Säurezahl von 20 bis 40 mg/g, sowie einen spezifischen Doppelbindungsgehalt (Stoffmenge der äthylenischen Doppelbindungen bezogen auf die Masse des Urethanharzes als Feststoff) von maximal 3,5 mol/kg (=mmol/g) aufweist.

Die erhaltenen Harze werden anschließend zumindest teilweise, bevorzugt zu mindestens 40 %, neutralisiert durch Zugabe geeigneter Neutralisationsmittel. Hierbei werden die Alkalihydroxide, unter diesen besonders Lithiumhydroxid, bevorzugt eingesetzt, ebenfalls bevorzugt verwendet man tertiäre Amine. Das neutralisierte Harz wird dann direkt oder invers in Wasser dispergiert.

Die Auswahl spezifischer Rohstoffe und der eingeschlagene Syntheseweg ermöglichen es somit, niedrigviskose Urethanharze herzustellen. Sie werden als Bindemittel für durch radikalische Polymerisation, insbesondere mittels UV-Bestrahlung, vernetzbare Lacke verwendet, die in der Anwendungsform frei von Monomeren vorliegen. Derartige Lacke ergeben durch Verdunsten des Wassers einen physikalisch trocknenden Film, der nach der Aushärtung einen hohen Vernetzungsgrad aufweist.

Die Formulierungen der Lacke für die verschiedenen Einsatzzwecke, sowie die Herstellung und Verarbeitung solcher Lacke, sind dem Fachmann bekannt und der Fachliteratur zu entnehmen.

Insbesondere eignen sich wäßrige Beschichtungsmittel, die die erfindungsgemäßen Urethanharze enthalten, zur Formulierung von Lacken für thermisch empfindliche Substrate wie Papier, Karton, Holz, Kork, Kunststoffe oder Textilien.

Die Beispiele erläutern die Erfindung, ohne sie in ihrem Umfang zu beschränken.

In den nachfolgenden Beispielen bedeuten ebenso wie im vorhergehenden Text alle Angaben mit der Einheit "%" Massenanteile, soweit nicht anders angegeben. "Teile" (abgekürzt "Tle") sind stets Massenteile. Konzentrationsangaben in "%" sind Massenanteile des gelösten Stoffes in der Lösung.

In den Beispielen werden folgende Abkürzungen für Kennzahlen und Rohstoffe verwendet:

SEG    spezifischer Epoxidgruppen-Gehalt

Der spezifische Epoxidgruppengehalt *SEG* ist der Quotient aus der Stoffmenge an Epoxidgruppen $n$(EP) und der Masse $m$ des Epoxids:

$$SEG = \frac{n(\text{EP})}{m}$$

EEW    "Epoxidäquivalentgewicht" (Kehrwert des SEG)

DBG    spezifischer Doppelbindungs-Gehalt

Der spezifische Doppelbindungsgehalt *DBG* ist der Quotient aus der Stoffmenge an äthylenischen Doppelbindungen $n$(>C=C<) und der Masse $m$ der ungesättigten Verbindung:

$$DBG = \frac{n\,(\text{>C=C<})}{m}$$

Hydroxylzahl

Die Hydroxylzahl ist gemäß DIN 53 240 definiert als der Quotient derjenigen Masse $m_{\text{KOH}}$ an Kaliumhydroxid, die genausoviel Hydroxylgruppen aufweist wie eine zu untersuchende Probe, und der Masse $m_{\text{B}}$ dieser Probe (Masse des Feststoffes in der Probe bei Lösungen oder Dispersionen); ihre übliche Einheit ist "mg/g".

Komponente (A)

IPDI    Isophorondiisocyanat
TDI    Toluylendiisocyanat

Komponente (B1)

(B1-1)    Umsetzungsprodukt aus 230 Tln (1 mol) Hexandioldiglycidyläther (SEG = 8700 mmol/kg; EEW = 115 g/mol) mit 144 Tln (2 mol) Acrylsäure,

        $n$(OH) = 2 mol
        Hydroxylzahl = 240 mg/g
        DBG = 4,30 mmol/g

(B1-2)    Umsetzungsprodukt aus 680 Tln Polypropylenglykoldiglycidyläther (Beckopox® EP 075; Vianova Resins GmbH; SEG = 2940 mmol/kg;

        EEW = 340 g/mol) mit 144 Tln (2 mol) Acrylsäure
        $n$(OH) = 2 mol
        Hydroxylzahl = 136 mg/g
        DBG = 2,42 mmol/g

(B1-3)    Umsetzungsprodukt aus 202 Tln (1 mol) Butandioldiglycidyläther (SEG = 9900 mmol/kg; EEW = 101 g/mol) mit 144 Tln (2 mol) Acrylsäure

        $n$(OH) = 2 mol
        Hydroxylzahl = 278 mg/g
        DBG = 4,95 mmol/g

Komponente (B2)

(B2-1)   Umsetzungsprodukt aus 134 Tlen (1 mol) Trimethylolpropan, welches mit 256,5 Tln (2,25 mol) ε-Caprolacton "verlängert" wurde, und 137 Tlen (1,9 mol) Acrylsäure

$n$(OH) = 1,10 mol
Hydroxylzahl = 125 mg/g
DBG = 3,85 mmol/g

(B2-2)   Umsetzungsprodukt aus 170 Tln (1 mol) "TMP-0,8 EO" (Polyol TP 08; Fa. Perstorp Polyols, SE; Umsetzungsprodukt von 0,8 mol Äthylenoxid je 1 mol Trimethylolpropan), welches mit 228 Tln (2 mol) ε-Caprolacton "verlängert" wurde, und 133,2 Tln (1,85 mol) Acrylsäure,

$n$(OH) = 1,15 mol
Hydroxylzahl = 130 mg/g
DBG = 3,71 mmol/g

(B2-3)   Umsetzungsprodukt aus 430 Tlen (1 mol) Penta-5 PO (Polyol PS 50; Fa. Perstorp Polyols, SE; Umsetzungsprodukt von 5 mol Propylenoxid je 1 mol Pentaerythrit) mit 205,2 Tln (2,85 mol) Acrylsäure

$n$(OH) = 1,15 mol
Hydroxylzahl = 110 mg/g
DBG = 4,88 mmol/g

(B2-4)   Umsetzungsprodukt aus 250 Tln (1 mol) Di-Trimethylolpropan, welches mit 347,7 Tln (3,05 mol) ε-Caprolacton "verlängert" wurde, und 212,4 Tln (2,95 mol) Acrylsäure

$n$(OH) = 1,05 mol
Hydroxylzahl = 78 mg/g
DBG = 3,89 mmol/g

Komponente (C)

DMPS     2,2-Bis-(hydroxymethyl)-propionsäure

1 Herstellung von strahlungshärtbaren wasserverdünnbaren Urethanharzen (Beispiele 1 bis 3)

1.1 Herstellung von UH1 (Beispiel 1)

Gemäß den Angaben in Tabelle 1 wurde die entsprechende Menge der Komponente (A-1), gemeinsam mit 0,1 %, bezogen auf die Masse von (A-1), Dibutylzinndilaurat in einem geeigneten Reaktionsgefäß vorgelegt. Die Mischung der Komponenten (B1-1) und (B2-1) wurde in 1 bis 3 Stunden unter Beachtung der leicht exothermen Reaktion zugetropft, wobei die Reaktionstemperatur 55 °C nicht übersteigen durfte. Der Ansatz wurde bei dieser Temperatur gehalten, bis ein Restgehalt an Isocyanatgruppen von 7,0 % erreicht war.

Anschließend wurden DMPS und ein Polymerisationsinhibitor ("BHT", butyliertes Hydroxytoluol) zugesetzt. Die Reaktionstemperatur wurde auf 90 °C erhöht, wobei ständig Luft durch die Masse geleitet wurde. Zur Verringerung der Viskosität wurde ein gegenüber Isocyanat-Gruppen reaktionsinertes organisches Lösungsmittel, welches mit Wasser ein Azeotrop bildet, mitverwendet.

Nachdem ein Isocyanat-Gruppen-Gehalt von ca. 0,3 % erreicht war, wurde die Komponente (B2-4) zugegeben. Der Ansatz wurde so lange bei 95 °C gehalten, bis keine freien Isocyanat-Gruppen mehr nachweisbar waren.

Das Reaktionsprodukt wurde abschließend gemäß den Angaben in Tabelle 1 neutralisiert und mit deionisiertem Wasser verdünnt. Vor der Einstellung auf den gewünschten Festkörpergehalt wurde das eingesetzte organische Lösungsmittel destillativ entfernt.

1.2 Herstellung von UH2 und UH3 (Beispiele 2 und 3)

Es wurde gemäß den Angaben in Tabelle 1 und den Hinweisen bei Beispiel 1 vorgegangen, wobei bei Beispiel 2 Dibutylzinndilaurat erst nach der Zugabe von DMPS zugesetzt wurde. In der Tabelle werden jeweils die Massen $m$ der eingesetzten Komponenten in g sowie ihre Stoffmengen $n$ in mol angegeben.

Das Verhältnis der Stoffmenge der Isocyanatgruppen $n$(NCO) zur Stoffmenge der Hydroxylgruppen $n$(OH) ist gleich dem Verhältnis der Anzahl dieser Gruppen N(NCO): $N$(OH) und wird in mol/mol oder als unbenannte Zahl angegeben.

Zur Neutralisation wurde LiOH eingesetzt, die Masse des Neutralisationsmittels $m$(LiOH) ist in g angegeben. Der Neutralisationsgrad gibt an, welcher Anteil (in %) der Säuregruppen in Carboxylatgruppen überführt wurde, Bezug (100 %) ist jeweils die Summe der Anzahl der Carboxylat- und der Carboxylgruppen.

Tabelle 1

| | Beispiel 1 | | Beispiel 2 | | Beispiel 3 | |
|---|---|---|---|---|---|---|
| | UH1 | | UH2 | | UH3 | |
| | $m$/g | ($n$/mol) | $m$/g | ($n$/mol) | $m$/g | ($n$/mol) |
| (A-1) (IPDI) | 222 | (1,0) | | | 222 | (1,0) |
| (A-2) (TDI) | | | 174 | (1,0) | | |
| (B1-1) | 70,1 | (0,30) | | | | |
| (B1-2) | | | 103,1 | (0,25) | | |
| (B1-3) | | | | | 70,6 | (0,35) |
| (B2-1) | 314,2 | (0,70) | | | | |
| (B2-2) | | | | | 129,5 | (0,30) |
| (B2-3) | | | 382,5 | (0,75) | | |
| (B2-4) | | | | | 251,7 | (0,35) |
| Reaktionstemperatur | < 60 °C | | < 35 °C | | < 60 °C | |
| NCO-Gehalt | 7,0 % | | 6,4 % | | 6,3 % | |
| | $m$/g | ($n$/mol) | $m$/g | ($n$/mol) | $m$/g | ($n$/mol) |
| (C) (DMPS) | 64,3 | (0,48) | 67,0 | (0,5) | 64,3 | (0,48) |
| Reaktionstemperatur | < 95 °C | | < 95 °C | | < 95 °C | |
| NCO-Gehalt | 0,26 ... 0,35 % | | 0 % | | 0,23 ... 0,33 % | |
| | $m$/g | ($n$/mol) | | | $m$/g | ($n$/mol) |
| (B2-2) | | | | | 51,8 | (0,12) |
| (B2-4) | 71,9 | (0,10) | | | | |
| Reaktionstemperatur | < 100 °C | | | | < 100 °C | |
| NCO-Gehalt Ende | 0 % | | | | 0 % | |
| $n$(NCO):$n$(OH) | 0,97 : 1 | | 1 : 1 | | 0,96 : 1 | |
| Säurezahl in mg/g | 36,3 | | 38,6 | | 34,1 | |
| $m$(LiOH) in g | 7,14 | | 6,60 | | 8,06 | |
| Neutralisationsgrad | 62% | | 55 % | | 70 % | |
| DBG in mmol/g | 2,41 | | 2,91 | | 2,53 | |

2 Vergleichsbeispiele V1 und V2

2.1 Vergleichsbeispiel V1

Vorgangsweise wie bei Beispiel 2, nur wurde die Reaktionstemperatur bei der Umsetzung der Komponenten (A-2), (B1-2) und (B2-2) auf 45 °C erhöht. Man erhielt ein hochviskoses, nicht wasserverdünnbares Endprodukt.

2.2 Vergleichsbeispiel V2

Entspricht dem Beispiel 4 der EP 0 694 531 A2 ($n$(NCO) : $n$(OH) = 1,38 : 1, DBG = 2,81 mmol/g)

3 Lacktechnische Prüfung der gemäß den Beispielen 1 bis 3 und gemäß dem Vergleichsbeispiel V2 hergestellten wasserverdünnbaren Urethanharze

Wasserverdünnbarer, UV-härtbarer Klarlack

| Rezeptur (Massen in g) | |
|---|---|
| 100,0 | Urethanharz, 40 %ige wäßrige Dispersion |
| 0,5 | Entschäumer, silikonfrei |
| 1,0 | Untergrundbenetzungsmittel |
| 2,0 | Photoinitiator (Darocur® 1173, Ciba Spezialitäten-Chemie AG) |
| 5,0 | Wasser, deionisiert |
| 108,5 | |

Die in üblicher Weise hergestellten Lacke wurden durch Zugabe von einer 5 %igen Lösung von LiOH in Wasser, auf einen pH-Wert von 7,9 bis 8,3 eingestellt, mit deionisiertem Wasser auf die erforderliche Viskosität verdünnt und durch Spritzapplikation auf Glasplatten aufgebracht.

Härtungsbedingungen:

Forcierte Lufttrocknung während 5 min bei 55 °C, UV-Härtung mit Quecksilber-Hochdruck-Lampen, 80 Watt/cm, Objektabstand ca. 10 cm, Bandgeschwindigkeit 4 m/min.

Prüfmethoden und Prüfergebnisse:

Physikalische Trocknung

Glasplatten, Schichtstärke (Naßfilm) 150 µm, Trocknung 10 min bei 50 °C (Umluftofen), unmittelbar danach wurde mit der sauberen, trockenen Fingerkuppe ein leichter Druck auf die Lackfläche ausgeübt. Die Lackschicht gilt als physikalisch getrocknet, wenn kein Abdruck der Fingerkuppe zu erkennen ist.

| Beurteilung: | ++ | sehr gut |
|---|---|---|
| | + | gut |
| | - | ungenügend |

Pendelhärte:

wurde gemäß DIN 53157 bestimmt an einer Lackschicht auf Glasplatten, Schichtstärke (Naßfilm) 150 µm.

Acetonfestigkeit:

wurde nach DIN 68861 ebenfalls Glasplatten bei einer Schichtstärke des Naßfilms von 150 µm bestimmt.

Tabelle 2

| Klarlack mit Bindemittel gemäß Beispiel | 1 | 2 | 3 | V2 |
|---|---|---|---|---|
| Physikalische Trocknung | + | ++ | + | - |
| Pendelhärte in s | 170 | 200 | 140 | 165 |
| Acetonfestigkeit in min | 180 | 210 | 180 | ca. 180 |

Bei erheblich verbesserter physikalischer Trocknung wurden die positiven Eigenschaften in bezüglich der Lösungsmittelbeständigkeit und der Pendelhärte beibehalten.

**Patentansprüche**

1. Strahlungshärtbare wasserverdünnbare Urethanharze, erhältlich durch Umsetzung in einem ersten Reaktionsschritt von

   (A)   1,0 mol eines cycloaliphatischen und/oder aromatischen Diisocyanats mit

   (B1)   einer (Meth)acryloylgruppen enthaltenden Dihydroxyverbindung in einer solchen Menge, daß die Stoffmenge der darin enthaltenen reaktiven Hydroxylgruppen 0,2 bis 0,6 mol beträgt, und

   (B2)   einem teilweise mit (Meth)acrylsäure veresterten drei- oder vierwertigen Polyol mit einer restlichen mittleren Hydroxylfunktionalität von 1,0 bis 1,4 im Molekül in einer solchen Menge, daß die Stoffmenge der reaktionsfähigen Hydroxylgruppen 0,4 bis 0,8 mol beträgt,

   wobei die Mengen von (B1) und (B2) so gewählt werden, daß die Summe der Stoffmengen der reaktionsfähigen Hydroxylgruppen von (B1) und (B2) im ersten Schritt immer 1,0 mol beträgt,
   in der Weise umsetzt, daß 40 bis 60 % der Isocyanatgruppen von (A) zu Urethangruppen umgewandelt werden, und das so erhaltene Zwischenprodukt anschließend mit

   (C)   einer aliphatischen gesättigten Monocarbonsäure mit mindestens zwei Hydroxylgruppen in einer solchen Menge, daß die Stoffmenge der reaktiven Hydroxylgruppen 0,6 bis 1 mol beträgt,

   bis zur vollständigen Reaktion der Hydroxylgruppen von (C) und gegebenenfalls mit weiterem Polyol (B2) in einer solchen Menge umsetzt, daß die Stoffmenge an weiteren Hydroxylgruppen von (B2) 0 bis 0,5 mol beträgt, bis zur vollständigen Reaktion der restlichen freien Isocyanatgruppen, wobei die Stoffmengenverhältnisse der Komponenten (A) bis (C) so gewählt werden, daß sich die Anzahlen der in den Komponenten (A) bis (C) enthaltenen Isocyanatgruppen und Hydroxylgruppen wie 0,9 : 1 bis 1 : 1 verhalten und das Reaktionsprodukt Carboxylgruppen aufweist entsprechend einer Säurezahl von 20 bis 40 mg/g, sowie einen spezifischen Doppelbindungsgehalt (Stoffmenge der äthylenischen Doppelbindungen bezogen auf die Masse des Feststoffes des Urethanharzes) von maximal 3,5 mol/kg.

2. Strahlungshärtbare wasserverdünnbare Urethanharze nach Anspruch 1, **dadurch gekennzeichnet, daß** die Verbindungen (A) ausgewählt sind aus 2,4- und 2,6-Diisocyanatotoluol und Isophorondiisocyanat.

3. Strahlungshärtbare wasserverdünnbare Urethanharze nach Anspruch 1, **dadurch gekennzeichnet, daß** als Verbindungen (B1) aliphatische Diglycidylverbindungen eingesetzt werden.

4. Strahlungshärtbare wasserverdünnbare Urethanharze nach Anspruch 1, **dadurch gekennzeichnet, daß** als Verbindungen (B2) partielle Veresterungsprodukte eingesetzt werden von (meth)Acrylsäure mit drei-oder vierwertigen Polyolen, die zuvor durch Reaktion mit Äthylen- oder Propylenoxid oder mit unter Ringöffnung addierbaren Lactonen modifiziert wurden.

5. Strahlungshärtbare wasserverdünnbare Urethanharze nach Anspruch 1, **dadurch gekennzeichnet, daß** als Komponente (C) 2,2-Bishydroxymethylpropionsäure eingesetzt wird.

6. Verfahren zur Herstellung von strahlungshärtbaren wasserverdünnbaren Urethanharzen gemäß Anspruch 1, **da-**

**durch gekennzeichnet, daß** in dessen erster Stufe

(A) 1,0 mol eines cycloaliphatischen und/oder aromatischen Diisocyanats umgesetzt wird mit einer Mischung (B) aus

(B1) einer (Meth)acryloylgruppen enthaltenden Dihydroxyverbindung und

(B2) einem teilweise mit (Meth)acrylsäure veresterten drei- oder vierwertigen Polyol mit einer restlichen mittleren Hydroxylfunktionalität von 1,0 bis 1,4 im Molekül,

wobei die Mengen von (B1) und (B2) so gewählt werden, daß die Stoffmenge der reaktiven Hydroxylgruppen in (B1) ($n_{OH}$(B1)) 0,2 bis 0,6 mol, und die Stoffmenge der reaktiven Hydroxylgruppen in (B2) ($n_{OH}$(B2)) 0,8 bis 0,4 mol beträgt, wobei stets die Summe $n_{OH}$(B1) + $n_{OH}$(B2) = 1 mol ist, in der Weise, daß 50 % der Isocyanatgruppen von (A) zu Urethangruppen umgewandelt werden, und in der zweiten Stufe das so erhaltene Zwischenprodukt anschließend mit

(C) einer aliphatischen gesättigten Monocarbonsäure mit mindestens zwei Hydroxylgruppen in einer solchen Menge, daß die Stoffmenge der reaktiven Hydroxylgruppen 0,6 bis 1 mol beträgt,

bis zur vollständigen Reaktion der Hydroxylgruppen von (C) und gegebenenfalls in einem dritten Schritt mit weiterem Polyol (B2) in einer solchen Menge umsetzt wird, daß die Stoffmenge an Hydroxylgruppen von dieser Portion von (B2) 0 bis 0,5 mol beträgt, bis zur vollständigen Reaktion der restlichen freien Isocyanatgruppen, wobei die Stoffmengenverhältnisse der Komponenten (A) bis (C) in allen drei Schritten so gewählt werden, daß sich die Anzahl der in der Komponente (A) enthaltenen Isocyanatgruppen und die Anzahl der in den Komponenten (B1), (B2) und (C) insgesamt enthaltenen Hydroxylgruppen wie 0,9 : 1 bis 1 : 1 verhalten und das Reaktionsprodukt Carboxylgruppen aufweist entsprechend einer Säurezahl von 20 bis 40 mg/g, sowie einen spezifischen Doppelbindungsgehalt (Stoffmenge der äthylenischen Doppelbindungen bezogen auf die Masse des Feststoffes des Urethanharzes) von maximal 3,5 mol/kg.

7. Wäßrige Dispersion eines strahlungshärtbaren wasserverdünnbaren Urethanharzes enthaltend ein Urethanharz gemäß Anspruch 1, wobei mindestens 40 % der in dem Harz ursprünglich vorhandenen Carboxylgruppen in Carboxylatgruppen überführt sind.

8. Verfahren zur Herstellung von wäßrigen Dispersionen von strahlungshärtbaren wasserverdünnbaren Urethanharzen gemäß Anspruch 1 in der Weise, daß durch Zugabe von Alkalihydroxiden oder tertiären Aminen mindestens 40 % der in dem Harz vorhandenen Carboxylgruppen in Carboxylatgruppen überführt werden, und das neutralisierte Harz anschließend durch Mischen mit Wasser unter Scherung dispergiert wird.

9. Wäßrige, durch Strahlung vernetzbare Beschichtungsmittel, enthaltend Urethanharze gemäß Anspruch 1.

10. Verwendung von Beschichtungsmitteln gemäß Anspruch 9 zur Lackierung von Holz.

**Claims**

1. Radiation-curable water-dilutable urethane resins obtainable by reacting, in a first reaction step,

(A) 1.0 mol of a cycloaliphatic and/or aromatic diisocyanate with

(B1) a (meth)acryloyl-containing dihydroxy compound in an amount such that the amount of reactive hydroxyl groups present therein is from 0.2 to 0.6 mol, and

(B2) a tri- or tetrahydric polyol which has been partly esterified with (meth)acrylic acid and has a residual average hydroxyl functionality of from 1.0 to 1.4 in the molecule, in an amount such that the amount of the reactive hydroxyl groups is from 0.4 to 0.8 mol,

the amounts of (B1) and (B2) being chosen so that the sum of the amounts of the reactive hydroxyl groups of (B1) and (B2) in the first step is always 1.0 mol, in such a way that from 40 to 60% of the isocyanate groups of (A) are converted into urethane groups, and subsequently reacting the resulting intermediate with

(C) an aliphatic saturated monocarboxylic acid having at least two hydroxyl groups, in an amount such that the amount of the reactive hydroxyl groups is from 0.6 to 1 mol, until the hydroxyl groups (C) have undergone complete reaction, and, if desired, reacting this product with further polyol (B2) in an amount such that the amount of further hydroxyl groups of (B2) is from 0 to 0.5 mol, until the remaining free isocyanate groups have undergone complete reaction, the molar proportions of the components (A) to (C) being chosen so that the number of isocyanate groups and hydroxyl groups present in components (A) to (C) are in a ratio to one another of from 0.9:1 to 1:1 and the reaction product possesses carboxyl groups in accordance with an acid number of from 20 to 40 mg/g and has a specific double bond content (molar amount of ethylenic double bonds relative to the mass of the urethane resin solids) of not more than 3.5 mol/kg.

2.  Radiation-curable water-dilutable urethane resins according to Claim 1, **characterized in that** the compounds (A) are selected from 2,4- and 2,6-diiso-cyanatotoluene and isophorone diisocyanate.

3.  Radiation-curable water-dilutable urethane resins according to Claim 1, **characterized in that** aliphatic diglycidyl compounds are employed as compounds (B1).

4.  Radiation-curable water-dilutable urethane resins according to Claim 1, **characterized in that** partial esterification products of (meth)acrylic acid with tri- or tetrahydric polyols, which have been modified beforehand by reaction with ethylene oxide or propylene oxide or with lactones which can be added in a ring-opening reaction, are employed as compounds (B2).

5.  Radiation-curable water-dilutable urethane resins according to Claim 1, **characterized in that** 2,2-bishydroxymethylpropionic acid is employed as component (C) .

6.  Process for preparing radiation-curable water-dilutable urethane resins according to Claim 1, **characterized in that** in its first stage

    (A)   1.0 mol of a cycloaliphatic and/or aromatic diisocyanate is reacted with a mixture (B) comprising
    (B1)  a (meth)acryloyl-containing dihydroxy compound and
    (B2)  a tri- or tetrahydric polyol which has been partly esterified with (meth)acrylic acid and has a residual average hydroxyl functionality of from 1.0 to 1.4 in the molecule,

    the amounts of (B1) and (B2) being chosen so that the amount of the reactive hydroxyl groups in (B1) ($n_{OH}$(B1)) is from 0.2 to 0.6 mol and the amount of the reactive hydroxyl groups in (B2) ($n_{OH}$(B2)) is from 0.8 to 0.4 mol, the sum $n_{OH}$(B1) + $n_{OH}$(B2) always being equal to 1 mol,
    in such a way that 50% of the isocyanate groups of (A) are converted into urethane groups, and,
    in the second stage, the resulting intermediate is subsequently reacted with

    (C)   an aliphatic saturated monocarboxylic acid having at least two hydroxyl groups in an amount such that the amount of the reactive hydroxyl groups is from 0.6 to 1 mol

    until the hydroxyl groups of (C) have undergone complete reaction, and if desired, in a third step,
    the product is reacted with further polyol (B2) in an amount such that the amount of hydroxyl groups of this portion of (B2) is from 0 to 0.5 mol, until the remaining free isocyanate groups have undergone complete reaction,
    the molar proportions of the components (A) to (C) in all three steps being chosen so that the number of isocyanate groups present in component (A) and the number of hydroxyl groups present in total in components (B1), (B2) and (C) are in a ratio to one another of from 0.9:1 to 1:1 and the reaction product possesses carboxyl groups in accordance with an acid number of 20 to 40 mg/g and has a specific double bond content (molar amount of ethylenic double bonds relative to the mass of the urethane resin solids) of not more than 3.5 mol/kg.

7.  Aqueous dispersion of a radiation-curable water-dilutable urethane resin comprising a urethane resin according to Claim 1, in which at least 40% of the carboxyl groups originally present in the resin have been converted into carboxylate groups.

8.  Process for preparing aqueous dispersions of radiation-curable water-dilutable urethane resins according to Claim 1 by converting at least 40% of the carboxyl groups present in the resin into carboxylate groups, by adding alkali metal hydroxides or tertiary amines, and subsequently dispersing the neutralized resin by mixing it with water under shear conditions.

9. Aqueous, radiation-crosslinkable coating compositions comprising urethane resins according to Claim 1.

10. Use of coating compositions according to Claim 9 for coating wood.


**Revendications**

1. Résines d'uréthannes diluables par l'eau, durcissables par irradiation, que l'on peut obtenir par réaction dans une première étape réactionnelle de

   (A)    1,0 mole d'un diisocyanate cycloaliphatique et/ou aromatiques avec
   (B1)   un composé dihydroxylé présentant des groupes (méth)acryloyles dans une quantité telle que la quantité de matière des groupes hydroxyle réactifs contenus soit de 0,2 à 0,6 mole, et
   (B2)   un polyol tri- ou tétrafonctionnel partiellement estérifié par l'acide (méth)-acrylique, dont la fonctionnalité hydroxyle résiduelle moyenne est de 1,0 à 1,4 dans la molécule, dans une quantité telle que la quantité de matière des groupes hydroxyle réactifs soit de 0,4 à 0,8 mole,

   les quantités de (B1) et de (B2) sont choisies de façon telle que la somme des quantités de matières des groupes hydroxyle réactifs de (B1) et de (B2) dans la première étape soit toujours de 1,0 mole, de la façon que 40 à 60 % des groupes isocyanato de (A) soient convertis en groupes uréthannes, et on fait réagir ensuite le produit intermédiaire ainsi obtenu sur

   (C)    un acide monocarboxylique aliphatique saturé avec au moins deux groupes hydroxyle dans une quantité telle, que la quantité de matière des groupes hydroxyle réactifs soit de 0,6 à 1 mole,

   jusqu'à la réaction complète des groupes hydroxyle de (C) et éventuellement sur un autre polyol (B2) dans une quantité telle que la quantité de matière d'autres groupes hydroxyle de (B2) soit de 0 à 0,5 mole, jusqu'à la réaction complète des groupes isocyanato résiduels libres, les rapports de matières des composants (A) à (C) étant choisis de façon telle que le nombre des groupes isocyanato et nombre des groupes hydroxyle contenus dans les composants (A) à (C) soit de 0,9:1 à 1:1 et le produit réactionnel présente des groupes carboxyle conformément à un indice d'acide de 20 à 40 mg/g, ainsi qu'une teneur spécifique en doubles liaisons (quantité de matière des doubles liaisons éthyléniques, par rapport à la masse de la matière solide de la résine d'uréthanne) de 3,5 moles/kg au maximum.

2. Résines d'uréthannes diluables par l'eau, durcissables par irradiation, selon la revendication 1, **caractérisées en ce que** les composés (A) sont pris parmi le 2,4- et le 2,6-diisocyanatotoluène et l'isophoronediisocyanate.

3. Résines d'uréthannes diluables par l'eau, durcissables par irradiation, selon la revendication 1, **caractérisées en ce qu'**on utilise en tant que composés (B1) des composés diglycidyliques aliphatiques.

4. Résines d'uréthannes diluables par l'eau, durcissables par irradiation, selon la revendication 1, **caractérisées en ce qu'**on utilise en tant que composés (B2) des produits d'estérification partielle d'acide (méth)acrylique avec des polyols tri- ou tétrafonctionnels, que l'on a modifiés auparavant par réaction avec l'oxyde d'éthylène ou l'oxyde de propylène ou par décyclisation de lactones que l'on peut fixer par addition.

5. Résines d'uréthannes diluables par l'eau, durcissables par irradiation, selon la revendication 1, **caractérisées en ce qu'**on utilise en tant que composant (C) l'acide 2,2-bis-hydroxyméthylpropionique.

6. Procédé pour la préparation de résines d'uréthannes diluables par l'eau, durcissables par irradiation, selon la revendication 1,
   **caractérisées en ce que**, dans la première étape, on fait réagir

   (A)    1,0 mole. d'un diisocyanate cycloaliphatique et/ou aromatique sur un mélange (B) comprenant
   (B1)   un composé dihydroxylé présentant des groupes (méth)acryloyle et
   (B2)   un polyol tri- ou tétrafonctionnel partiellement estérifié par l'acide (méth)-acrylique, dont la fonctionnalité hydroxyle résiduelle moyenne va de 1,0 à 1,4 dans la molécule,
          les quantités de (B1) et de (B2) étant choisies de façon telle que la quantité de matière des groupes hydroxyle réactifs dans (B1) ($n_{OH}$(B1)) soit de 0,2 à 0,6 mole, et la quantité de matière des groupes hydroxyle réactifs dans (B2) $n_{OH}$(B2) soit de 0,8 à 0,4 mole, la somme de $n_{OH}$(B1)) + $n_{OH}$(B2) est toujours = 1 mole,

de la façon qu'environ 50 % des groupes isocyanato de (A) soient convertis en groupes uréthannes, et on fait réagir dans la deuxième étape le produit intermédiaire ainsi obtenu sur

(C)     un acide monocarboxylique aliphatique saturé présentant au moinds deux groupes hydroxyle dans une quantité telle que la quantité de matière des groupes hdyroxyle réactifs soit de 0,6 à 1 mole,

jusqu'à la réaction complète des groupes hydroxyle de (C) et éventuellement dans une troisième étape sur un autre polyol (B2) dans une quantité telle que la quantité de matière de groupes hydroxyle de (B2) soit de 0 à 0,5 mole, jusqu'à la réaction complète des groupes résiduels isocyanato libres,
les rapports de quantités de matières des composants (A) à (C) dans les trois étapes étant choisis de façon telle que le nombre des groupés isocyanato contenus dans le composant (A) et le nombre groupes hydroxyle contenus au total dans les composants (B1), (B2) et (C) soit de 0,9:1 à 1:1 et le produit réactionnel présente des groupes carboxyle conformément à un indice d'acide de 20 à 40 mg/g, ainsi qu'une teneur spécifique en doubles liaisons (quantité de matière des doubles liaisons éthyléniques, par rapport à la masse de la matière solide de la résine d'uréthanne) de 3,5 moles/kg au maximum.

7.  Dispersion aqueuse contenant une résine d'uréthanne diluable par l'eau, durcissable par irradiation selon la revendication 1, au moins 40 % de groupes carboxyle présents dans la résine à l'origine étant transformés en groupes carboxylate.

8.  Procédé pour la préparation de dispersions aqueuses de résines d'uréthannes diluables par l'eau, durcissables par irradiation selon la revendication 1, de façon telle que par l'ajout d'hydroxydes alcalins ou d'amines tertiaires au moins 40 % de groupes carboxyle présents dans la résine soient transformés en groupes carboxylate, et ensuite on disperse la résine neutralisée par mélange avec l'eau sous l'effet de cisaillement.

9.  Agents de revêtement aqueux réticulables par irradiation, contenant des résines d'uréthannes selon la revendication 1.

10. Utilisation d'agents de revêtement selon la revendication 9 pour le laquage du bois.